# EUROPÄISCHE PATENTANMELDUNG

(11) **EP 3 181 374 A1**
(43) Veröffentlichungstag der Anmeldung: **21.06.2017**
(21) Anmeldenummer: 16193614.1
(22) Anmeldetag: 13.10.2016
(51) Int. Cl.: B60C 9/00, B60C 9/18

(54) **VERSTÄRKUNGSLAGE ODER VERSTÄRKUNGSSTREIFEN FÜR ELASTOMERE ERZEUGNISSE**

(30) Priorität: 15.12.2015 DE 102015225244
(71) Anmelder: Continental Reifen Deutschland GmbH, 30165 Hannover (DE)
(72) Erfinder: Justine, Carole, 31535 Scharrel (DE); Kramer, Thomas, 32049 Herford (DE)
(74) Vertreter: Finger, Karsten

(57) **Zusammenfassung**

Verstärkungslage (9, 9') oder Verstärkungsstreifen für elastomere Erzeugnisse, insbesondere Fahrzeugluftreifen, mit bandförmigen Festigkeitsträgern, welche parallel zueinander verlaufend in ein elastomeres Material (11) eingebettet sind und deren Querschnittsdicke (d) kleiner ist als ihre Querschnittsbreite (b), wobei die Breite (b) im Wesentlichen parallel zur flächigen Erstreckung der Verstärkungslage (9, 9') oder des Verstärkungsstreifens ausgerichtet ist.

Zumindest ein Festigkeitsträger ist ein Carbonfilamentband (10) mit einer Dicke von mindestens 1 µm, welches eine Vielzahl von im Wesentlichen parallel zueinander verlaufenden in eine die Bandform bildende Matrix eingebetteten Carbonfilamenten enthält.

## Beschreibung

Die Erfindung betrifft eine Verstärkungslage oder einen Verstärkungsstreifen für elastomere Erzeugnisse, insbesondere Fahrzeugluftreifen, mit bandförmigen Festigkeitsträgern, welche parallel zueinander verlaufend in ein elastomeres Material eingebettet sind und deren Querschnittsdicke kleiner ist als ihre Querschnittsbreite, wobei die Breite im Wesentlichen parallel zur flächigen Erstreckung der Verstärkungslage oder des Verstärkungsstreifens ausgerichtet ist.

Verstärkungslagen oder Verstärkungsstreifen in elastomeren Erzeugnissen, insbesondere in Fahrzeugluftreifen, sind in unterschiedlichen Ausführungsvarianten und hinreichend bekannt. Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in die Wulstbereiche reicht und dort durch Umschlingen zugfester Wulstkerne verankert ist, einen radial außerhalb der Radialkarkasse verlaufenden Gürtelverband und einen profilierten Laufstreifen auf. Der Gürtelverband besteht üblicherweise aus mehreren, Festigkeitsträger enthaltenden Gürtellagen, die gegebenenfalls radial außen mit einer Gürtelbandage abgedeckt sind, die ein- oder mehrlagig ausgebildet sein kann und zumindest die Gürtelränder abdeckt. Es ist bekannt und üblich, als Festigkeitsträger der Gürtellagen oder der Gürtelbandage Garne oder Korde zu verwenden, welche aus Stahl oder einem textilen Material bestehen und im Wesentlichen einen runden Querschnitt aufweisen. Gemäß den aktuellen Tendenzen bei der Reifenentwicklung sollen Fahrzeugluftreifen einen möglichst geringen Rollwiderstand aufweisen, sodass neben anderen Maßnahmen das Gewicht der Reifen reduziert werden soll. Die Dicke der Verstärkungslagen beziehungsweise Verstärkungsstreifen in Fahrzeugluftreifen, insbesondere der Radialkarkasse, der Gürtellagen oder der Gürtelbandage, ist bereits durch eine Reduktion der Gummierungsdicke der Verstärkungslagen und Verstärkungsstreifen verringert worden, wobei derzeit die Gummierungsdicke auf ein Minimum reduziert ist und eine weitere Reduktion der Dicke der Verstärkungslagen beziehungsweise Verstärkungsstreifen nur durch Reduktion der Dicke beziehungsweise der Durchmesser der Festigkeitsträger erreicht werden kann.

Aus der EP 2 205 452 B1 ein Fahrzeugluftreifen bekannt, dessen Festigkeitsträger in der Gürtelbandage und/oder der Radialkarkasse flach ausgeführt sind und eine Dicke aufweisen, die geringer ist als die Dicke eines Festigkeitsträgers mit gleicher Querschnittsfläche bei rundem Querschnitt. Aus der EP 0 157 716 A1 ist es bekannt, als Festigkeitsträger in Gürtellagen flache Stahldrähte zu verwenden.

Der Erfindung liegt die Aufgabe zugrunde, insbesondere zur weiteren Reduktion des Rollwiderstandes von Fahrzeugluftreifen, Verstärkungslagen bzw. Verstärkungsstreifen mit Festigkeitsträgern zu versehen, welche es gestatten, die Dicke der Verstärkungslagen bzw. der Verstärkungsstreifens noch weiter zu reduzieren, wobei die Festigkeitsträger eine hohe Reißfestigkeit und eine geringe Bruchdehnung aufweisen sollen. Die Festigkeitsträger sollen insbesondere für den Einsatz in Gürtellagen von Fahrzeugluftreifen geeignet sein.

Gelöst wird die gestellte Aufgabe erfindungsgemäß dadurch, dass zumindest ein Festigkeitsträger ein Carbonfilamentband mit einer Dicke von mindestens 1 µm ist, welches eine Vielzahl von im Wesentlichen parallel zueinander verlaufenden und in eine die Bandform bildende Matrix eingebetteten Carbonfilamenten enthält.

Gemäß der Erfindung ausgeführte Verstärkungslagen oder Verstärkungsstreifen können daher sehr dünn ausgeführt werden, insbesondere wesentlich dünner als herkömmlich ausgeführte Verstärkungslagen oder Verstärkungsstreifen. Carbonfilamentbänder als Festigkeitsträger können ohne weiteres eine Bruchdehnung (gemäß DIN EN ISO 527) aufweisen, die in der Größenordnung von 1,5% bis 4% beträgt. Diese geringe Bruchdehnung macht solche Festigkeitsträger besonders für den Einsatzzweck in Gürtellagen von Fahrzeugluftreifen geeignet. Bei vergleichbaren Eigenschaften weisen die Gürtellagen jedoch eine sehr geringe Dicke und damit auch ein sehr geringes Gewicht auf, sodass der Rollwiderstand der Fahrzeugluftreifen merklich reduziert werden kann.

Die Erfindung betrifft ferner einen Fahrzeugluftreifen in Radialbauart mit einem Laufstreifen, einem mehrlagigen Gürtel, einer Karkasse und Wulstbereichen, welcher im Gürtel und/oder der Karkasse eine Verstärkungslage und/oder einen Verstärkungsstreifen gemäß einem oder mehreren der Ansprüche enthält.

Bei einer bevorzugten Ausführungsform der Erfindung ist die Matrix, in welche die Carbonfilamente eingebettet sind, ein Thermoplast, beispielsweise ein Polyamid. Dieses Material gestattet eine Herstellung besonders dünner Carbonfilamentbänder durch Pultrusion.

Bei einer weiteren bevorzugten Ausführungsform ist die Matrix ein Wachs oder ein Harz, Solche Carbonfilamentbänderlassen sich in das elastomere Materialder Verstärkungslage, gegebenenfalls nach Benetzung mit einem Haftvermittler, gut einbinden.

Die Dicke und die Breite der Carbonfilamentbänder kann in einem weiten Bereich variiert werden, je nach Einsatzzweck. Verstärkungslagen oder Verstärkungsstreifen für elastomere Erzeugnisse, insbesondere Fahrzeugluftreifen, enthalten bevorzugt Carbonfilamentbänder mit einer Dicke, die bis zu 1.500 µm, insbesondere bis 500 µm und vorzugsweise bis 350 µm, beträgt. Die Breite der Carbonfilamentbänder kann 50 µm bis 15.000 µm betragen.

Auch die Feinheit der Carbonfilamentbänder in Verstärkungslagen bzw. Verstärkungsstreifen kann in einem sehr weiten Bereich variieren. Bevorzugt sind Bereiche für die Feinheit von 50 dtex bis 10.000 dtex, insbesondere 250 dtex bis 8.000 dtex und vorzugsweise 940 dtex bis 4.000 dtex.

Verstärkungslagen oder Verstärkungsstreifen gemäß der Erfindung können ferner als Festigkeitsträger ausschließlich Carbonfilamentbänder enthalten, die vorzugsweise ausschließlich Carbonfilamente aufweisen.

In erfindungsgemäßen Verstärkungslagen oder Verstärkungsstreifen können Carbonfilamentbänder in Kombination mit anderen flachen, bandförmigen Festigkeitsträgern enthalten sein, die Filamente oder Garne aus anderen Materialien, beispielsweise aus Rayon, Polyester, Polyamid und dergleichen, sind.

Bei einer weiteren erfindungsgemäßen Ausführungsform enthält die Verstärkungslage bzw. der Verstärkungsstreifen Carbonfilamentbänder, die Carbonfilamente in Kombination mit Filamenten oder Garnen aus zumindest einem anderen Material, insbesondere aus Rayon, Polyester, Polyamid, beispielsweise PA 6.6, oder aus Aramid oder aus Hybridmaterialien, wie beispielsweise PA 6.6/Aramid, enthalten.

In der Verstärkungslage oder dem Verstärkungsstreifen werden vorteilhafterweise flache, bandförmige Festigkeitsträger verwendet, deren Dicke zumindest im Wesentlichen übereinstimmt.

Weitere Merkmale, Vorteile und Einzelheiten der Erfindung werden nun anhand der schematischen Zeichnung, die Ausführungsbeispiele darstellt, näher erläutert. Dabei zeigen
Fig. 1 einen Teilradialschnitt durch einen Fahrzeugluftreifen und
Fig. 2 und Fig. 3 Querschnitte durch Abschnitte von Verstärkungslagen eines Elastomerproduktes, insbesondere eines Fahrzeugluftreifens, mit zwei Ausführungsvarianten der Erfindung.

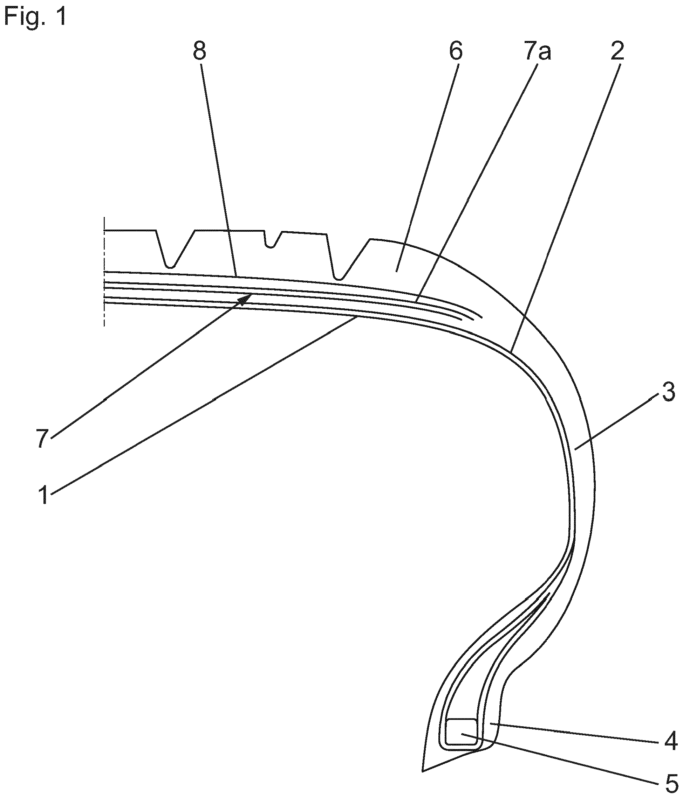

Fig. 1 zeigt die rechte Hälfte eines Querschnittes durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine zumindest eine Verstärkungslage beinhaltende Karkasse 2, die in herkömmlicher Weise vom Zenitbereich des Fahrzeugluftreifens über Seitenwände 3 bis in die Wulstbereiche 4 reicht und dort durch Umschlingen zugfester Wulstkerne 5 verankert ist, ein radial außerhalb der Karkasse 2 befindlicher profilierter Laufstreifen 6 und ein zwischen dem Laufstreifen 6 und der Karkasse 2 angeordneter, hier beispielhaft zwei Gürtellagen 7a beinhaltender Gürtel 7, welcher in herkömmlicher Weise radial außen mit einer Gürtelbandage 8 abgedeckt ist.

Die zumindest eine Verstärkungslage beinhaltende Karkasse 2 enthält Festigkeitsträger, die im Wesentlichen in radialer Richtung verlaufen. Die Gürtellagen 7a enthalten gemäß der Erfindung ausgeführte, nachstehend näher beschriebene Festigkeitsträger, die, wie in herkömmlich ausgeführten Gürtellagen, parallel zueinander ausgerichtet sein können und in jeder Lage unter einem spitzen Winkel zum Reifenumfang verlaufen können. Ein Gürtelverband eines PKW-Reifens mit Gürtellagen mit Festigkeitsträgern gemäß der Erfindung kann auch mehr als zwei Gürtellagen, insbesondere bis zu vier Gürtellagen, enthalten. Die Gürtelbandage 8 beinhaltet Festigkeitsträger, die im Wesentlichen in der Umfangsrichtung des Reifens verlaufen.

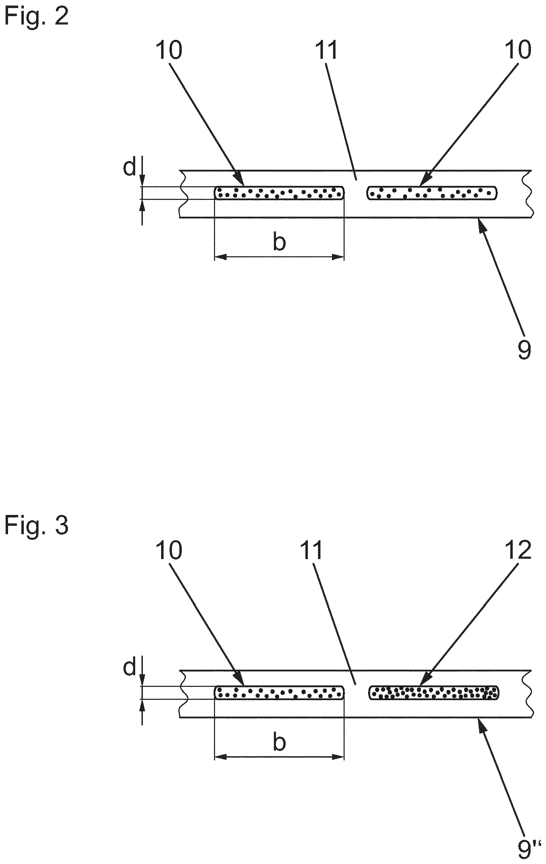

Fig. 2 und 3 zeigen Querschnitte durch Abschnitte von Verstärkungslagen 9, 9' welche Gürtellagen sein können und gemäß der Erfindung als Festigkeitsträger Carbonfilamentbänder 10 enthalten, die in ein elastomeres Material 11, insbesondere Gummi, eingebettet sind. Die Querschnittsebene steht hierbei senkrecht zur Längserstreckungsrichtung der Bänder 10. Ein Carbonfilamentband 10 besteht aus einer Vielzahl von neben- und übereinander und zumindest im Wesentlichen parallel zueinander verlaufenden Carbonfilamenten 10a. Eine Vielzahl an Filamenten bedeutet hierbei eine Anzahl von mindestens mehreren Hundert Filamenten.

Das Carbonfilamentband 10 wird durch Pultrusion hergestellt, sodass die Carbonfilamente bereits bei der Herstellung des Carbonfilamentbandes 10 in eine das Band bildende Matrix eingebettet werden, insbesondere in einen Thermoplast, beispielsweise ein Polyamid, oder in ein Wachs oder ein Harz oder eine sonstige Substanz, welche mit dem elastomeren Material 11 wechselwirken kann. Vorteilhaft ist es, wenn das Carbonfilamentband 10 vor dem beidseitigen Gummieren mit einem Haftvermittler benetzt wird, insbesondere in einem Dip-Vorgang. Vorteilhaft ist weiter, wenn das Gewicht des ausgehärteten Haftvermittlers 1 bis 50 Gew.-%, vorzugsweise 2 bis 30 Gew.-%, insbesondere 3 bis 15 Gew.-%, des Gewichtes des Bandes 10 ausmacht. Ein Haftvermittler, welcher mit elastomerem Material 11 wechselwirken kann, ist beispielsweise vom Typ 15 RFL (Resorcin-Formaldehyd-Latex). Durch einen Haftvermittler, welcher mit dem elastomeren Material 11 wechselwirken kann, kann eine zuverlässige Haftung des Carbonfilamentbandes 10 zum elastomeren Material 11 bewirkt werden.

Die Carbonfilamente können ferner seitens des Herstellers nach einer der bekannten Methoden aktiviert werden, um die Filamentmatrixhaftung zu verbessern.

Die Anzahl der Carbonfilamente im Carbonfilamentband 10 bestimmt die Feinheit des Carbonfilamentbandes 10, die in einem sehr weiten Bereich variieren kann. Die Feinheit des Carbonfilamentbandes 10 kann 50 dtex bis 10.000 dtex, insbesondere 250 bis 8.000 dtex, vorzugsweise 940 dtex bis 4.000 dtex, betragen. Die Anzahl der übereinander und nebeneinander innerhalb eines Carbonfilamentbandes 10 angeordneten beziehungsweise enthaltenen Filamente bestimmt die Dicke d des jeweiligen Carbonfilamentbandes 10 und dessen Breite b. Das Carbonfilamentband 10 weist eine Mindestdicke d von 1 µm auf, wobei je nach Ausführung und Einsatzzweck seine Dicke d bis zu 1.500 µm betragen kann, insbesondere bis 500 µm, vorzugsweise bis 350 µm. Die Breite b des Carbonfilamentbandes 10 beträgt 50 µm bis 15.000 µm, für den bevorzugten Einsatzzweck als Festigkeitsträger in einer Gürtellage eines Fahrzeugluftreifens 0,5 mm bis 5 mm. Das Verhältnis der Breite b zur Dicke d sollte vorzugsweise ≥ 1,5 sein.

Ist die Verstärkungslage 9 eine Gürtellage eines Fahrzeugluftreifens sind die Carbonfilamentbänder 10 vorzugsweise derart eingebettet, dass sie zwar parallel zueinander aber unter einem Winkel von 16° bis 55°, vorzugsweise 18° bis 32° bei PKW-Reifen und bis zu 50° bei LKW-Reifen, zur Umfangsrichtung verlaufen. Die unter gegenseitigen Abständen von 0,01 mm bis 1,5 mm, insbesondere 0,04 mm bis 1,2 mm, vorzugsweise 0,07 mm bis 1,0 mm, nebeneinander verlaufenden Carbonfilamentbänder 10 können in eine übliche Gummierungsmischung eingebettet sein.

Die in einer Verstärkungslage 9, beispielsweise einer Gürtellage oder einer Bandagenlage, nebeneinander verlaufenden Carbonfilamentbänder 10 können unterschiedliche Breiten aufweisen, um bestimmte Reifeneigenschaften gezielt beeinflussen zu können.

Fig. 3 zeigt einen Querschnitt eines Abschnittes einer Verstärkungslage 9', welche als Festigkeitsträger sowohl Carbonfilamentbänder 10 als auch flache bandförmige Festigkeitsträger 12 aus einem anderen Material enthalten, insbesondere aus Rayon, Polyester, Polyamid, beispielsweise PA 6.6, oder aus Aramid oder aus Hybridmaterialen wie beispielsweise PA 6.6/Aramid. Diese ebenfalls sehr flach ausgeführten Festigkeitsträger 12 bestehen insbesondere aus durch einen Haftvermittler, wie oben beschrieben, zusammengehaltenen Garnen des entsprechenden Materials bzw. der entsprechenden Materialien. So kann beispielsweise die Verstärkungslage 9' jeweils abwechselnd ein Carbonfilamentband 10 und einen Festigkeitsträger 12 nebeneinander und parallel zueinander verlaufend enthalten. Bei den in Frage kommenden Materialen beträgt die Feinheit des Festigkeitsträger 12 250 dtex bis 8.000 dtex, insbesondere 940 dtex bis 4.000 dtex, bezüglich der Dicke und der Breite gelten die für die Dicke und Breite der Carbonfilamentbänder 10 erwähnten Werte, die Dicke beträgt daher von 1 µm bis 1.500 µm, insbesondere bis 500 µm, vorzugsweise bis 350 µm, die Breite 50 µm bis 15.000 µm, insbesondere 0,5 mm bis 5 mm.

Bei einer weiteren Ausführungsform enthält der bandförmige Festigkeitsträger Carbonfilamente in Kombination mit Filamenten oder Garnen aus zumindest einem anderen Material, insbesondere aus Rayon, Polyester, Polyamid, beispielsweise PA 6.6, oder aus Aramid oder aus Hybridmaterialen wie beispielsweise PA 6.6/Aramid.

Carbonfilamentbänder 10 gemäß der Erfindung können ferner als Festigkeitsträger in gummierten Verstärkungsstreifen mit einer Breite von 0,3 mm bis 30 mm, bevorzugt von 0,5 mm bis 20 mm verwendet werden. Solche Verstärkungsstreifen werden beispielsweise zur Erstellung einer so genannten Spulbandage als Gürtelbandage eines Fahrzeugluftreifens verwendet.

### Bezugsziffernliste

- 1: Innenschicht
- 2: Karkasse
- 3: Seitenwand
- 4: Seitenwand
- 5: Wulstkern
- 6: Laufstreifen
- 7: Gürtel
- 7a: Gürtellage
- 8: Gürtelbandage
- 9, 9': Verstärkungslage
- 10: Carbonfilamentband
- 11: elastomeres Material
- 12: Festigkeitsträger
- b: Breite
- d: Dicke

## Patentansprüche

1. Verstärkungslage (9, 9') oder Verstärkungsstreifen für elastomere Erzeugnisse, insbesondere Fahrzeugluftreifen, mit bandförmigen Festigkeitsträgern, welche parallel zueinander verlaufend in ein elastomeres Material (11) eingebettet sind und deren Querschnittsdicke (d) kleiner ist als ihre Querschnittsbreite (b), wobei die Breite (b) im Wesentlichen parallel zur flächigen Erstreckung der Verstärkungslage (9, 9') oder des Verstärkungsstreifens ausgerichtet ist,
**dadurch gekennzeichnet,**
**dass** zumindest ein Festigkeitsträger ein Carbonfilamentband (10) mit einer Dicke von mindestens 1 µm ist, welches eine Vielzahl von im Wesentlichen parallel zueinander verlaufenden in eine die Bandform bildende Matrix eingebetteten Carbonfilamenten enthält.

2. Verstärkungslage (9, 9') oder Verstärkungsstreifen nach Anspruch 1, **dadurch gekennzeichnet, dass** die Matrix ein Thermoplast, beispielsweise ein Polyamid, ist.

3. Verstärkungslage (9, 9') oder Verstärkungsstreifen nach Anspruch 1, **dadurch gekennzeichnet, dass** die Matrix ein Wachs oder ein Harz ist.

4. Verstärkungslage (9, 9') oder Verstärkungsstreifen nach einem der Ansprüche 1 bis 3, **dadurch gekennzeichnet, dass** die Dicke (d) des Carbonfilamentbandes (10) bis 1.500 µm, insbesondere bis 500 µm, vorzugsweise bis 350 µm, beträgt.

5. Verstärkungslage (9, 9') oder Verstärkungsstreifen nach einem der Ansprüche 1 bis 4, **dadurch gekennzeichnet, dass** die Breite (b) des Carbonfilamentbandes (10) 50 µm bis 15.000 µm beträgt.

6. Verstärkungslage (9, 9') oder Verstärkungsstreifen nach einem der Ansprüche 1 bis 5, **dadurch gekennzeichnet, dass** das Carbonfilamentband (10) eine Feinheit von 50 dtex bis 10.000 dtex, insbesondere von 250 dtex bis 8.000 dtex, vorzugsweise von 940 dtex bis 4.000 dtex, aufweist.

7. Verstärkungslage (9, 9') oder Verstärkungsstreifen nach einem der Ansprüche 1 bis 6, **dadurch gekennzeichnet, dass** sie bzw. er als Festigkeitsträger ausschliesslich Carbonfilamentbänder (10) enthält.

8. Verstärkungslage (9, 9') oder Verstärkungsstreifen nach einem der Ansprüche 1 bis 7, **dadurch gekennzeichnet, dass** sie bzw. er Carbonfilamentbänder (10) sowie andere flache bandförmige Festigkeitsträger (12) enthält.

9. Verstärkungslage (9, 9') oder Verstärkungsstreifen nach einem der Ansprüche 1 bis 8, **dadurch gekennzeichnet, dass** das Carbonfilamentband die Carbonfilamente in Kombination mit Filamenten oder Garnen aus zumindest einem anderen Material, insbesondere aus Rayon, Polyester, Polyamid, beispielsweise PA 6.6, oder aus Aramid oder aus Hybridmaterialen, wie beispielsweise PA 6.6/Aramid, enthält.

10. Verstärkungslage (9, 9') oder Verstärkungsstreifen nach Anspruch 8 oder 9, **dadurch gekennzeichnet, dass** die Dicke (d) der flachen bandförmigen Festigkeitsträger (12) aus dem zumindest einem anderen Material zumindest im Wesentlichen der Dicke (d) der Carbonfilamentbänder (10) entspricht.

11. Fahrzeugluftreifen in Radialbauart mit einem Laufstreifen, einem mehrlagigen Gürtel, einer Karkasse und Wulstbereichen, **dadurch gekennzeichnet, dass** der Gürtel und/oder die Karkasse eine Verstärkungslage (9, 9') und/oder einen Verstärkungsstreifen gemäß einem oder mehreren der Ansprüche 1 bis 10 enthält.
